# EUROPEAN PATENT APPLICATION

(11) **EP 4 207 010 A1**
(43) Date of publication of application: **05.07.2023**
(21) Application number: 21861637.3
(22) Date of filing: 25.08.2021
(51) Int. Cl.: G06Q 10/04, G06Q 40/08, G06T 7/00

(54) **INSURANCE PREMIUM CALCULATION SYSTEM AND INSURANCE PREMIUM CALCULATION METHOD**

(30) Priority: 28.08.2020 JP 2020145099
(71) Applicant: Anicom Holdings, Inc., Shinjuku-ku Tokyo 160-0023 (JP)
(72) Inventor: KOMORI Nobuaki, Tokyo 160-0023 (JP); KOIZUMI Akihito, Tokyo 160-0023 (JP); ALTINTAS Ersin, Tokyo 160-0023 (JP)
(74) Representative: Gill Jennings & Every LLP
(86) International application number: PCT/JP2021/031226
(87) International publication number: WO 2022/045214

(57) **Abstract**

An insurance premium calculation system includes: a reception means that accepts an input of a facial image of an animal excluding humans; a determination means that performs predictive determination of an age of the animal from the facial image of the animal input to the reception means using a trained model; and an insurance premium calculation means that calculates an insurance premium based on the age obtained by the predictive determination by the determination means. The trained model is a trained model obtained by performing learning using, as teaching data, the facial image of the animal excluding humans and the age of the animal at the time of photographing, the trained model using the facial image of the animal as an input and using the predictive determination of the age of the animal as an output.

## Description

### TECHNICAL FIELD

The present invention relates to an insurance premium calculation system and an insurance premium calculation method, and more particularly to an insurance premium calculation system and an insurance premium calculation method, which provide a prediction relating to the age of an animal from an image of the face of the animal, and calculate an insurance premium that is based on the prediction relating to the age.

### BACKGROUND ART

Pet animals including dogs, cats and rabbits, among others, and domestic animals including cows and pigs, among others, are precious beings to humans. In recent years, while the average life span of animals reared by humans has remarkably increased, the animals, in many cases, contract some diseases in their lifetimes, leading to a problem of an increase in medical expenses borne by rearers.

Thus, pet insurance covering medical expenses of pet animals is provided. As regards the pet insurance, like life insurance and health insurance for humans, in many cases, the insurance premium and the eligibility for insurance are determined in accordance with ages of animals. However, in some cases, it is difficult to ascertain the exact age of an animal, unlike humans of which the family registration system is well maintained, and whose ages can easily be confirmed by identification cards or the like. For example, the date of birth and the age of an animal protected on the street are unknown, and as regards animals transferred through breeders or pet shops, there are cases where the owners lose records relating to the birth or forget the ages. In addition, when taking out pet insurance, the possibility of false declaration in regard to the age cannot be denied.

Besides, although the necessity for pet insurance is high since the pet insurance covers high medical expenses, there is still room for improvement in the penetration rate. One reason for this is considered to be that the motivation of owners to take out pet insurance does not increase.

Thus, there is a demand for means for ascertaining, by an easy method, the age of an animal that is an object of pet insurance. If the age of an animal at a time of taking out pet insurance or at a time of an examination for taking out pet insurance, this is useful since it becomes possible to calculate the insurance premium and perform an insurance purchase examination in accordance with the age. Furthermore, if the age of a pet, for example, the actual age or health age, or what age the appearance of a pet corresponds to, can be understood by a simple method, this can provide an opportunity for the owner to be careful of the health of the pet, and, by extension, it can be expected to raise the owner's motivation to take out pet insurance.

Patent Document 1 discloses an insurance premium calculation apparatus that calculates an insurance premium in accordance with the kind of disease, the apparatus including an acquisition unit that acquires detection data including at least either vital data or lifestyle data of an insurant, and a determination unit that determines an insurance premium for each of kinds of diseases, based on the detection data and insurant data including at least the age of the insurant. Patent Document 2 discloses an insurance purchase support system of a reared animal.

However, the calculation apparatus described in Patent Document 1 is an insurance premium calculation apparatus with an object of insurance being a person, and is not intended for insurance premium calculation of insurance for animals. In addition, in the insurance premium calculation apparatus described in Patent Document 1, the age of an insurant is ascertained in advance. Besides, the insurance purchase support system described in Patent Document 2 determines an insurance purchase time from basic information and disease information of an animal, and does not include a determination function of the age of an animal and an insurance premium calculation function based on this function.

### RELATED ART DOCUMENTS

### PATENT DOCUMENTS

[Patent Document 1] JP2018-26100A
[Patent Document 2] JP2017-224188A

### SUMMARY OF THE INVENTION

### PROBLEMS TO BE SOLVED BY THE INVENTION

Thus, the object of the present invention is to provide an insurance premium calculation system and the like, which perform, by a simple method, predictive determination of the age of an animal and insurance premium calculation corresponding to the predictive determination of the age.

### MEANS FOR SOLVING THE PROBLEMS

An insurance company, which operates health insurance for animals, commonly known as pet insurance, accumulates an enormous number of photographs of animals, and information relating to the ages of animals at the time of photographing, and the present inventors have studied whether the above problem can be solved by using them. As a result, the inventors have found that a prediction model that performs predictive determination of the age of an animal from a photograph of the animal can be generated if artificial intelligence is trained using, as teaching data, photographs of animals and the age of the animals at the time of photographing, and have completed the present invention.

Specifically, the present invention includes the following [1] to [9].
[1] An insurance premium calculation system including:
   a reception means for receiving an input of a facial image of an animal excluding humans;
   a determination means for performing predictive determination of an age of the animal from the facial image of the animal input to the reception means using a trained model; and
   an insurance premium calculation means for calculating an insurance premium based on the age obtained by the predictive determination by the determination means,
   wherein the trained model is a trained model obtained by performing learning using, as teaching data, the facial image of the animal excluding humans and the age of the animal at the time of photographing, the trained model using the facial image of the animal as an input and using the predictive determination of the age of the animal as an output.
[2] The insurance premium calculation system of [1], wherein the animal is a dog.
[3] The insurance premium calculation system of [1], wherein the animal is a cat.
[4] The insurance premium calculation system of any one of [1] to [3], wherein the facial image of the animal is an image captured by photographing a face of the animal from a front.
[5] The insurance premium calculation system of any one of [1] to [4], further including a storage unit for storing an insurance premium table including an age of an animal and an insurance premium, wherein the insurance premium calculation means calculates the insurance premium using the insurance premium table.
[6] An age prediction system including:
   a reception means for receiving an input of a facial image of an animal excluding humans; and
   a determination means for performing predictive determination of an age of the animal from the facial image of the animal input to the reception means using a trained model,
   wherein the trained model is a trained model obtained by performing learning using, as teaching data, the facial image of the animal excluding humans and the age of the animal at the time of photographing, the trained model using the facial image of the animal as an input and using the predictive determination of the age of the animal as an output.
[7] A generation method of a trained model for predicting an age of an animal excluding humans from a facial image of the animal including: inputting, as teaching data, the facial image of the animal excluding humans and the age of the animal at the time of photographing to a computer including artificial intelligence; and causing the artificial intelligence to learn the teaching data.
[8] An insurance premium calculation method including:
   preparing a facial image of an animal excluding humans;
   inputting the facial image to a trained model, and outputting, by a computer, a prediction of an age of the animal at the time of photographing the facial image from the input facial image of the animal using the trained model; and
   calculating an insurance premium for the animal based on the prediction of the age,
   wherein the trained model is a trained model obtained by performing learning using, as teaching data, the facial image of the animal excluding humans and the age of the animal at the time of photographing, the trained model using the facial image of the animal as an input and using the age of the animal as an output.
[9] An insurance purchase eligibility determination system including:
   a reception means for receiving an input of a facial image of an animal excluding humans;
   a determination means for performing predictive determination of an age of the animal from the facial image of the animal input to the reception means using a trained model; and
   an insurance purchase eligibility determination means for determining whether the animal is eligible for insurance based on the age obtained by the predictive determination by the determination means,
   wherein the trained model is a trained model obtained by performing learning using, as teaching data, the facial image of the animal excluding humans and the age of the animal at the time of photographing, the trained model using the facial image of the animal as an input and using the predictive determination of the age of the animal as an output.

### EFFECTS OF THE INVENTION

According to the present invention, there can be provided an age prediction system that determines the age of an animal by a simple method, and an insurance premium calculation system or the like, which calculates an insurance premium for an animal based on the determination result of the age. In addition, since the age of a pet, for example, the actual age or health age, or what age the appearance of a pet corresponds to, can be understood by a simple method, the owner is given an opportunity to become careful of the health of the reared animal, and, by extension, it can be expected to raise the owner's motivation to take out pet insurance, and to improve the pet insurance purchase rate.

### BRIEF DESCRIPTION OF THE DRAWINGS

FIG. 1 is a view illustrating a preferable example of a facial image of an animal.
FIG. 2 is a view illustrating a preferable example of a facial image of an animal.
FIG. 3 is a schematic structural view illustrating an embodiment of an insurance premium calculation system of the present invention.
FIG. 4 is a view illustrating an example of an insurance premium table.
FIG. 5 is a flowchart illustrating an example of a flow of insurance premium calculation by the insurance premium calculation system of the present invention.
FIG. 6 is a flowchart illustrating an example of a flow of insurance premium calculation by the insurance premium calculation system of the present invention.
FIG. 7 is a schematic structural view illustrating an embodiment of the insurance premium calculation system of the present invention.
FIG. 8 is a facial image (photograph) of an animal used in learning of Example.
FIG. 9 is a facial image (photograph) of an animal used in learning of Example.
FIG. 10 is a facial image (photograph) of an animal used in learning of Example.
FIG. 11 is a table illustrating the numbers of images and test results used in learning of Reference Example.

### MODE FOR CARRYING OUT THE INVENTION

### [Age prediction system]

An age prediction system of the present invention includes a reception means that accepts an input of a facial image of an animal excluding humans, and a determination means that predicts or determines the age of the animal from the facial image of the animal input to the reception means using a trained model and outputs the age.

### [Reception means]

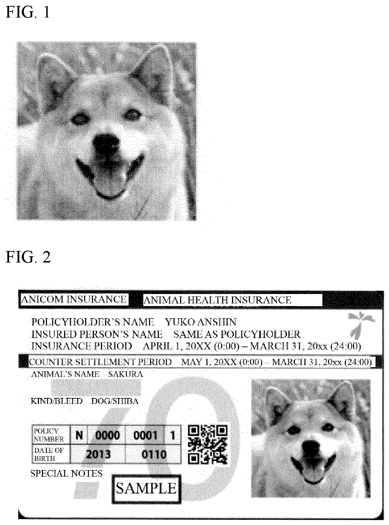

The reception means of the present invention is a means that accepts an input of a facial image of an animal the age of which is to be predicted. Examples of the animal include mammals such as a dog, a cat, a rabbit and a ferret, birds, reptiles, and pet animals, and the mammals are preferable and the dog and cat are more preferable. A reception method of the image may be any method such as scan, input or transmission of image data, and image take-in by photography on the spot. The format of the facial image is not particularly limited, but the facial image is preferably a photograph taken by photographing the face of the animal from the front and is more preferably a photograph in which the face of the animal appears in a large size as illustrated in FIG. 1. An example of such a photograph includes a photograph of a human on a driver's license. As illustrated in FIG. 2, an image used on a health insurance card of an animal is preferable. The image may be black-and-white, gray-scale, or color. Unpreferable images are an image in which the entire face of an animal does not appear, an image with a shape edited by image editing software, an image in which a plurality of animals appear, an image in which the face appears so small that the eyes and ears cannot be distinguished, and an unclear image. As regards the image, it is preferable that the image is subjected to normalization, and the resolution or the like is standardized.

### [Determination means]

The determination means of the present invention includes a trained model obtained by performing learning using, as teaching data, the facial image of the animal excluding humans and the age (the number of years elapsed from the date of birth) at the time of photographing the animal, the trained model using the facial image of the animal as an input and using a prediction of the age at the time of photographing the animal as an output. The age may be divided in the unit of month, in the unit of year, or in divisions. The divisions are, for example, in the case of dogs, a baby/young age (1 year old), an intermediate age (2 to 7 years old) and an elderly age (8 years old or more). The method of division is not limited to this, and divisions may be a baby/young age (less than 1 year old), an adult dog (2 to 7 years old), an elderly dog (8 to 10 years old), and an old age (11 years old or more). Other animals such as a cat and a ferret can also be divided into age groups in accordance with their average life span.

As the trained model, artificial intelligence (AI) is preferable. Artificial intelligence (AI) is software or a system in which intelligent work performed by the human brain is simulated by a computer, and is, concretely, a computer program or the like, which comprehends a natural language used by humans, performs logical inference, or performs learning from experience. Artificial intelligence may be either a general-purpose one or a purpose-specific one or may be either a deep neural network or a convolutional neural network, and publicized software can be used.

In order to generate a trained model, artificial intelligence is trained using teaching data. The learning may be either machine learning or deep learning, but deep learning is preferable. Deep learning is a development of machine learning and is characterized by automatically finding features.

The learning method for generating a trained model is not particularly limited, and publicized software can be used. For example, DIGITS (the Deep Learning GPU Training System) publicized by NVIDIA can be used. Besides, learning may be performed by a publicly known support vector machine method publicized in, for example, "Support Vector Machine Nyumon" ("Introduction to Support Vector Machines"), Kyoritsu Shuppan, or the like.

The teaching data for learning are facial images of animals and ages of the animals at the time of photographing. The facial images of animals as teaching data are the same as the facial images described in the above reception method. The information on the age of the animal is available from an animal hospital or from the owner of the animal who intends to insure the animal, as information provided at the time of application for insurance purchase. The age may be in the unit of month, in the unit of year, or in divisions. The divisions are, for example, in the case of dogs, a baby/young age (less than 1 year old), an intermediate age (2 to 7 years old) and an elderly age (8 years old or more). The method of division is not limited to this, and divisions of dogs, for example, may be a baby/young age (less than 1 year old), an adult dog (2 to 7 years old), an elderly dog (8 to 10 years old), and an old age (11 years old or more). Other animals such as a cat and a ferret can also be divided into age groups in accordance with their average life span.

### [Output]

When the determination means of the present invention receives a facial image of an animal as input information, the trained model is used to make a predictive determination of the age of the animal at the time of photographing the facial image. The age to be output may be the actual age (the number of years/months elapsed from the date of birth) or the health age (what age the health condition or the appearance condition of the animal corresponds to).

The format of the output is not particularly limited, and, for example, a predictive determination can be output by displaying "1 year and 2 months" or "juvenile age", "baby/young age" and "old age" on the screen of a personal computer. As additional information, the certainty of the predictive determination of the age, such as "1 year and 2 months old (reliability: 80%)", may be output at the same time. Alternatively, the age may be output as a numerical range, such as "11 months to 1 year and 2 months old", "less than 1 year old", "1 to 2 years old", and "8 years old or more". The age prediction system of the present invention may additionally include output means that receives a determination result from the determination means and outputs the determination result.

By utilizing the age prediction system of the present invention, the calculation of an insurance premium, as described later, can be performed, and, moreover, when the determined age is higher than the actual age of an animal, effective food for aging prevention can be proposed to the owner of the animal, thus prompting the owner to be careful of health management of the animal.

### [Insurance premium calculation system]

An insurance premium calculation system of the present invention includes: a reception means that accepts an input of a facial image of an animal excluding humans; a determination means that performs, using a trained model, predictive determination of an age of the animal from the facial image of the animal that is input to the reception means; and an insurance premium calculation means that calculates an insurance premium based on the age obtained by the predictive determination by the determination means, the trained model being a trained model obtained by performing learning using, as teaching data, the facial image of the animal excluding humans and the age of the animal at the time of photographing , and the trained model using the facial image of the animal as an input and using the predictive determination of the age of the animal as an output.

Specifically, the insurance premium calculation system of the present invention inputs a facial image of an animal to be insured to the above-described age prediction system, and calculates the insurance premium of the animal in accordance with an output age prediction result. A publicly known method can be used for the calculation method of the insurance premium corresponding to the age. For the determination of the insurance premium, use may be made of, as well as the prediction of the age, a prediction of disease contraction of the animal, and the information of the kind, breed, sex, body weight, medical history, and the like of the animal. As regards the prediction of the disease contraction of the animal, a learning model to be described later can be used. In addition, as regards the information of the kind, breed, sex, body weight, medical history, and the like of the animal, the information can be obtained by encouraging the animal owner or the person who applies for animal insurance to input the information from a terminal.

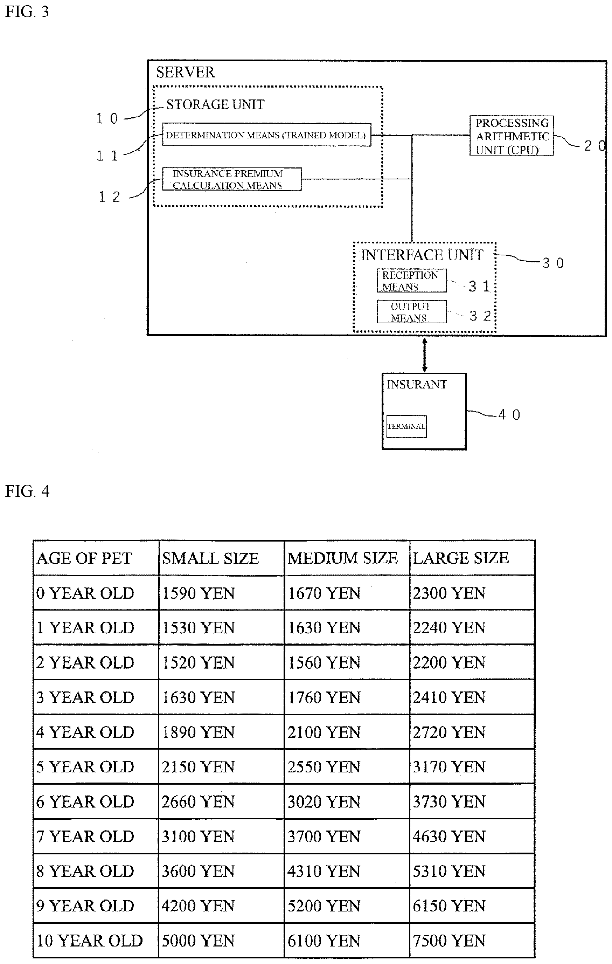

Hereinafter, one embodiment of the insurance premium calculation system of the present invention is described with reference to FIG. 3.

In FIG. 3, a terminal 40 is a terminal that is used by a policyholder (an applicant for an insurance contract, a user). The terminal 40 is, for example, a personal computer, or a tablet terminal. The terminal 40 is configured to include a processing unit such as a CPU, a storage unit such as a hard disk, a ROM or a RAM, a display unit such as a liquid crystal panel, an input unit such as a mouse, a keyboard or a touch panel, and a communication unit such as a network adapter.

A user accesses a server from the terminal 40, and inputs and transmits a facial image (photograph) of an animal that is an object of insurance, and the information of the kind, breed, sex, body weight, medical history, and the like of the animal. In the calculation of the insurance premium and the determination of insurance purchase eligibility, since it is desired to perform predictive determination of the age of the animal at the time of applying for insurance purchase, it is preferable that at the time point when the policyholder applies for insurance, much time has not passed since the facial image (photograph) of the animal was captured. For example, the facial image is preferably within 6 months, more preferably within 3 months, and still more preferably within 1 month, from the time of photographing. Alternatively, at the time of the application, the user may take a facial photograph of an animal that is an object using a smartphone camera on the spot, enter and transmit the facial photograph. For example, a user takes a facial photograph of an animal to be insured in accordance with an instruction displayed on the screen of the terminal 40, and, if an appropriate photograph is taken, transmits it to the server. At this time, the server may be further configured to include a photography support means composed of an image determination program, and the photography support means determines whether the photography is appropriate for predictive determination of the age of the animal, such as whether the entire face of the animal is photographed and whether the photography is taken from the front of the face of the animal, and communicates the determination result to the user via an interface or a terminal.

By accessing the server via the terminal 40, the user can also receive an age prediction result or an insurance premium calculation result on the server.

In the present embodiment, the server is composed of a computer, but the server may be any apparatus as far as the server includes functions of the present invention. The server may be a server on a cloud.

A storage unit 10 is composed of, for example, a ROM, a RAM, or a hard disk. The storage unit 10 stores an information processing program for operating each part of the server, and stores, in particular, a determination means (trained model) 11, and, where necessary, an insurance premium calculation means 12. The insurance premium calculation means 12 may be omitted if the system does not aim at calculating the insurance premium but is constituted as the age prediction system that simply outputs a prediction of the age.

The determination means (trained model) 11, as described above, inputs the facial image of the animal to be insured input by the user, and outputs a prediction of the age of the animal in the image at the time of photographing. The determination means (trained model) 11 in the present embodiment is configured to include, for example, a deep neural network or a convolutional neural network.

The insurance premium calculation means 12 is software that calculates an insurance premium of the animal from the prediction of the age output by the determination means 11. Where necessary, the information of the kind, breed, sex, age (declared age) at the time of photographing, body weight, medical history, and the like of the animal input by the user, may be used for the calculation of the insurance premium. For example, the software is software for grading the insurance premium according to the kind, breed, sex, body weight, medical history, and the like of the animal, correcting, at last, the grade by taking into account the prediction of the age that was output by the determination means 11 and calculating a final insurance premium. The software may calculate the final insurance premium by first performing the grading according to the predictive determination result of the age, and then correcting the insurance premium according to the kind, breed, sex, body weight, medical history, and the like of the animal. The insurance premium calculation means 12 and the determination means (trained model) 11 may be single software. The insurance premium calculation means may calculate the insurance premium using a calculation formula for insurance premium calculation, and by inserting the information, such as the age of the animal, into the calculation formula, or may calculate the insurance premium by storing an insurance premium table as illustrated in FIG. 4 in advance in the storage unit, and referring to the insurance premium table by the insurance premium calculation means. The insurance premiums described in FIG. 4 are examples of monthly insurance premiums.

A processing arithmetic unit 20 executes the prediction of the age and the calculation of the insurance premium using the determination means (trained model) 11 and insurance premium calculation means 12 stored in the storage unit.

An interface unit (communication unit) 30 includes a reception means 31 and an output means 32, accepts the facial image of the animal and other information from the terminal of the user, and outputs the prediction of the age of the animal and the calculation result of the insurance premium to the terminal of the user.

In the insurance premium calculation system of the present embodiment, a policyholder uploads a photograph of a pet for creating a health insurance card for the pet to the server, thereby creating a health insurance card for the pet and obtaining a calculation result of an insurance premium of the pet.

The insurance premium calculation system of the present invention may be such a mode of having the user declare the age of the animal, performing predictive determination of the age from the facial image of the animal provided by the user, and calculating an insurance premium after correcting the age declared by the user based on the predictive determination result. In the insurance premium calculation system of the present invention, the insurance premium calculation means may also include a function of presenting a determination result of ineligibility for insurance purchase, in place of the calculation of the insurance premium or together with the calculation of the insurance premium, when the age obtained by the predictive determination is a predetermined value or more. For example, in the case of a dog, when the predictive determination result of the age is 11 years old or more, 12 years old or more, 13 years old or more, 14 years old or more, or 15 years old or more, the determination result of ineligibility for insurance purchase is presented. In the case of a cat, when the predictive determination result of the age is 13 years old or more, 14 years old or more, 15 years old or more, 16 years old or more, or 17 years old or more, the determination result of ineligibility for insurance purchase is presented. Predetermined values of the age, at which the ineligibility for insurance purchase is determined, can be set according to the kind or breed of animals.

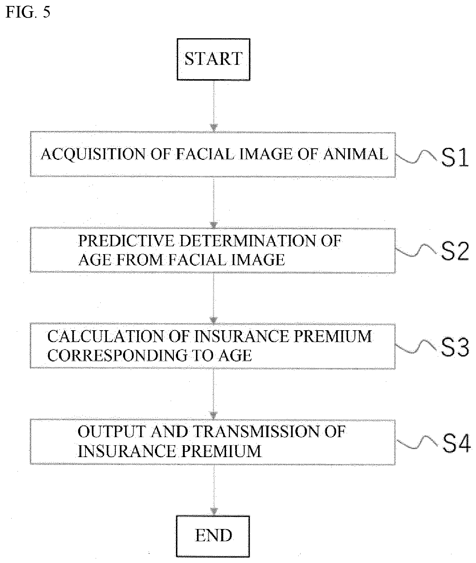

FIG. 5 illustrates a flowchart of insurance premium calculation based on one embodiment of the insurance premium calculation system of the present invention. Using the terminal, the user inputs basic information such as the kind, breed, body weight and the like of an animal, for which the user considers purchasing insurance, to the reception means of the server and uploads the facial image of the animal (step S 1). The processing arithmetic unit of the server performs predictive determination of the age of the animal at the time of photographing from the uploaded facial image using the determination means (trained model) (step S2). Using the insurance premium calculation means, the processing arithmetic unit calculates the insurance premium based on the predictive determination result of the age (step S3). The output means presents the calculated insurance premium to the user by, for example, displaying the calculated insurance premium on the screen of the user's terminal (step S4).

The insurance premium calculation system of the present invention may include, in addition to the above-described determination means (trained model), a disease prediction means that performs predictive determination as to whether the animal contracts a disease from the facial image of the animal. The disease prediction means includes a trained model obtained by performing learning using, as teaching data, a facial image of an animal excluding humans and a fact of disease contraction within a predetermined period from the time of photographing the animal, the trained model using the facial image of the animal as an input and using a prediction of disease contraction of the animal as an output. By including the disease prediction means in addition to the determination means, not only the age can be predicted, but also the possibility of future disease contraction of the animal can be predicted, at a time of applying for insurance purchase, and the calculation of a more reasonable insurance premium can be performed.

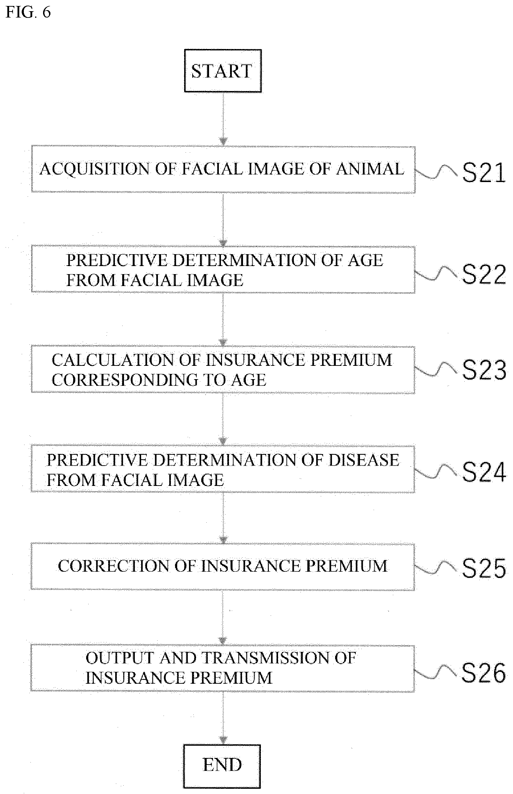

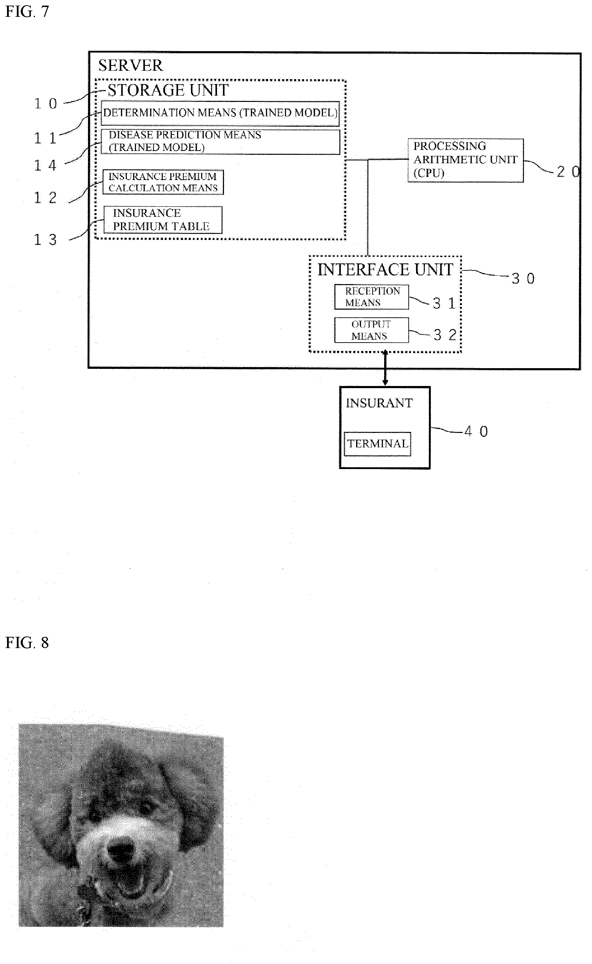

FIG. 6 illustrates a flowchart of insurance premium calculation based on one embodiment of the insurance premium calculation system of the present invention in the case where the disease prediction means is included (the structural figure is shown in FIG. 7). Using the terminal, the user inputs basic information such as the kind, breed, body weight and the like of an animal, for which the user considers purchasing insurance, to the reception means of the server and uploads the facial image of the animal (step S21). The processing arithmetic unit of the server performs predictive determination of the age of the animal at the time of photographing from the uploaded facial image using the determination means (trained model) (step S22). Using the insurance premium calculation means, the processing arithmetic unit calculates the insurance premium, based on the predictive determination result of the age (step S23). The disease prediction means performs predictive determination of the possibility of future disease contraction of the animal from the facial image of the animal (step S24). Then, if the possibility of disease contraction is high, the insurance premium calculation means corrects the insurance premium in such a direction as to increase the insurance premium calculated based on the age, and if the possibility of disease contraction is low, the insurance premium calculation means corrects the insurance premium in such a direction as to decrease the insurance premium (step S25). The insurance premium calculation means may also include a function of calculating the insurance premium based on the age, without correction, if the possibility of disease contraction is not different from an average in regard to the animal. The insurance premium calculation means may also include a function of outputting a determination result of ineligibility for insurance purchase, regardless of the predictive determination result of the age, when the possibility of disease contraction is a predetermined value or more. The output means presents the calculated insurance premium to the user by, for example, displaying the calculated insurance premium on the screen of the user's terminal (step S26).

The teaching data for the learning of the possibility of disease contraction are the facial image of an animal and the presence/absence of disease contraction as to whether the animal contracted a disease within a predetermined period from the time of photography of the facial image, preferably within 3 years, more preferably within 2 years, and still more preferably within 1 year. The facial image of the animal as the teaching data is the same as the facial image described in the above reception method. The information as to whether the animal contracted a disease is available, for example, as a fact of an insurance claim (also referred to as "accident") from an animal hospital or the owner or the like that insured the animal. Specifically, in the case where the animal is an animal that is covered by pet insurance, if the animal is taken to a hospital and diagnosed as contracting a disease, the animal hospital or the owner (the policyholder of pet insurance) informs the insurance company of the fact of disease contraction and claims an insurance payment, and thus the insurance company can recognize that the animal contracted the disease. On the other hand, if an insurance payment is not claimed until a predetermined period has passed since the facial image was created, it can be judged that the insured animal did not contract a disease during this period.

The trained model may be generated for each disease, or may be generated for a plurality of diseases together. When the trained model is generated for each disease, learning is performed using, as teaching data, a facial image of an animal that contracted a specific disease, which was photographed a predetermined period before the contraction of the disease, the fact that the animal contracted the disease, a facial image of an animal as a comparison object that did not contract the disease during a predetermined period from the capturing of the facial image, and the fact that the animal did not contract the disease during the predetermined period. When learning is performed for a plurality of diseases together, a plurality of teaching data should be prepared as the teaching data, such as an animal that contracted a certain disease and a facial image captured a predetermined period before the contraction of the disease, an animal that contracted another disease than the certain disease and a facial image captured a predetermined period before the contraction of the disease, and an animal that contracted still another disease and a facial image captured a predetermined period before the contraction of the disease.

### [Diseases]

The kinds of diseases targeted in the present invention are not particularly limited, and examples of the diseases include ophthalmological diseases, otological diseases and dermatological diseases. The ophthalmological diseases include conjunctivitis, eye mucus, corneitis, corneal ulcer/ulceration, lacrimation, cataract, and glaucoma. The otological diseases include external otitis, and otitis media. The dermatological diseases include dermatitis, atopic dermatitis, and pyoderma.

### [Insurance purchase eligibility determination system]

An insurance purchase eligibility determination system of the present invention is a system that determines whether a subject animal is eligible for insurance based on the above-described predictive determination result of the age. Specifically, in the insurance premium calculation system of the present invention, when the age obtained by the predictive determination based on the facial photograph of the animal is a predetermined value or more, insurance purchase eligibility determination means determines that the animal is ineligible for insurance purchase. For example, in the case of a dog, when the predictive determination result of the age is 11 years old or more, 12 years old or more, 13 years old or more, 14 years old or more, or 15 years old or more, the determination result of ineligibility for insurance purchase is presented. In the case of a cat, when the predictive determination result of the age is 13 years old or more, 14 years old or more, 15 years old or more, 16 years old or more, or 17 years old or more, the determination result of ineligibility for insurance purchase is presented. Predetermined values of the age, at which the ineligibility for insurance purchase is determined, can be set according to the kind or breed of animals. The insurance purchase eligibility determination means is software that determines whether the purchase of insurance of the animal is permitted, from the prediction of the age that is output by the determination means 11. Where necessary, the information input by the user on the kind, breed, sex, age (declared age) at the time of photographing, body weight, medical history, and the like of the animal may be used for the insurance purchase eligibility determination.

### EXAMPLES

### [Example 1]

A trained model was generated by performing deep learning using facial photographs (by way of example, color photographs of FIG. 8 to FIG. 10; standardized to 256 × 256 pixels) of toy poodles. Of the facial photographs used, 11,519 were of baby/young (less than 1 year old), and 11,519 were of old age (8 years old or more).

In the TensorFlow environment of Anaconda, a convolutional neural network was used, and deep learning was performed by labeling photograph data of the toy poodles as baby/young or old age.

As a validation, the generated learning model was asked to determine whether each of 1,000 facial photographs of "baby/young" and "old age", which were used in the evaluation of the trained model, is "baby/young" or "old age", and the accuracy was 93.5%.

Further, as a test, the generated learning model was asked to determine whether each of 1,000 facial photographs of "baby/young" and "elderly", which were different from the facial photographs used in the generation of the trained model, is "baby/young" or "old age", and the accuracy was 92.5%.

### [Example 2]

A trained model was generated by performing deep learning using facial photographs of toy poodles. Of the facial photographs used, 11,519 were of baby/young (less than 1 year old), 11,519 were of intermediate age (3 to 5 years old), and 11,519 were of old age (8 years old or more).

In the TensorFlow environment of Anaconda, a convolutional neural network was used, and deep learning was performed by labeling photograph data of the toy poodles as baby/young, intermediate age, or old age.

As a validation, the generated learning model was asked to determine whether each of 1,000 facial photographs of "baby/young", "intermediate age" and "old age", which were used in the evaluation of the trained mode, is "baby/young", "intermediate age" or "old age", and the accuracy for "old age" was 87.5%.

Further, as a test, the generated learning model was asked to determine whether each of 1,000 facial photographs of "baby/young", "intermediate age" and "old age", which are different from the facial photographs used in the generation of the trained model, is "baby/young", "intermediate age" or "old age", and the accuracy relating for "old age" was 87.8%.

### [Example 3]

Next, as a second stage of learning, deep learning was performed using facial photographs of the toy poodles of 40,207 baby/young and 40,207 intermediate age.

As a validation, the generated learning model was asked to determine whether each of 3,000 facial photographs of "baby/young" and "intermediate age", among the facial photographs used in the evaluation of the trained model, is "baby/young" or "intermediate age", and the accuracy was 92.2%.

Further, as a test, the generated learning model was determined whether each of 3000 facial photographs of "baby/young" and "intermediate age", which are different from the facial photographs used in the generation of the trained model, is "baby/young" or "intermediate age", and the accuracy was 91.5%.

### [Reference examples: Prediction of diseases]

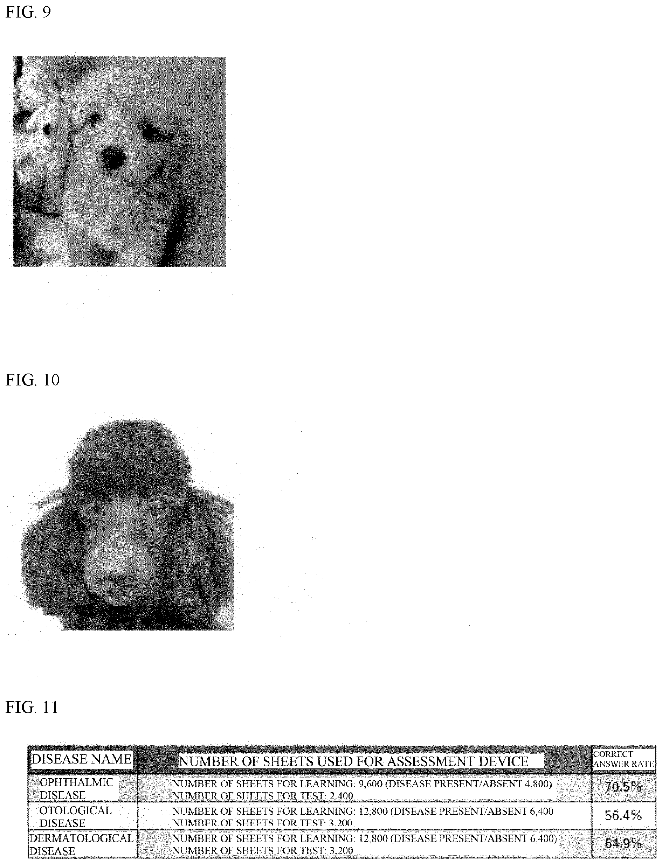

A trained model was generated by performing deep learning using facial photographs (by way of example, color photographs of FIG. 8 to FIG. 10; standardized to 256 × 256 pixels) of toy poodles, the numbers of photographs being listed in FIG. 11.

GoogLeNet was used as artificial intelligence (neural network), NVIDIA DIGITS Ver.3.0.0 was used as software for learning, and deep learning was performed by labeling photograph data with the presence or absence of disease.

For ophthalmological diseases, a trained model A was generated using, as photographs for teaching data, 4,800 photographs of toy poodles that contracted ophthalmological diseases within one year from the date of photography, and 4,800 photographs of toy poodles that did not contract ophthalmological diseases within one year of the date of photography.

With respect to the generated trained model A, a test was conducted using 2,400 photographs of the 9,600 photographs used for learning, and the accuracy of determination of the presence or absence of ophthalmological diseases (the ratio, to the number of all photographs, of the total number of photographs of animals that actually contracted diseases within one year, which were determined to be "presence of disease" and photographs of animals that did not actually contract diseases within one year, which were determined to be "absence of disease") was 70.5%.

As regards otological diseases, a trained model B was generated using, as photographs for teaching data, 6,400 photographs of toy poodles that contracted otological diseases within one year from the date of photography and 6,400 photographs of toy poodles that did not contract otological diseases within one year from the date of photography.

With respect to the generated trained model B, a test was conducted using 3,200 photographs of the 12,800 photographs used for learning, and the accuracy of determination of the presence or absence of otological diseases was 56.4%.

As regards dermatological diseases, a trained model C was generated using, as photographs for teaching data, 6,400 photographs of toy poodles that contracted dermatological diseases within one year from the date of photography and 6,400 photographs of toy poodles that did not contract dermatological diseases within one year from the date of photography.

With respect to the generated trained model C, a test was conducted using 3,200 photographs of the 12,800 photographs used for learning, and the accuracy of determination of the presence or absence of dermatological diseases was 64.9%.

With respect to the generated trained models A to C described above, determination was executed using images of toy poodles that were not used as the teaching data.

As regards ophthalmological diseases, 4,066 images of toy poodles, which were not used as teaching data, were used, and, of these images, 2,033 images were images ("absence of accident") of toy poodles that did not contract ophthalmological diseases, and 2,033 images were images ("presence of accident") of toy poodles that contracted ophthalmological diseases within one year from the date of photography. In the trained model A, as the prediction of diseases of toy poodles, the accuracy was 70.1%.

As regards the otological diseases, 4,000 images of toy poodles, which were not used as teaching data, were used, and, of these images, 2,000 images were images ("absence of accident") of toy poodles that did not contract otological diseases, and 2,000 images were images ("presence of accident") of toy poodles that contracted otological diseases within one year from the date of photography. In the trained model B, as the prediction of diseases of toy poodles, the accuracy was 55.0%.

As regards the dermatological diseases, 4,000 images of toy poodles, which were not used as teaching data, were used, and, of these images, 2,000 images were images ("absence of accident") of toy poodles that did not contract dermatological diseases, and 2,000 images were images ("presence of accident") of toy poodles that contracted dermatological diseases within 1 year of the date of photography. In the trained model C, as the prediction of diseases of toy poodles, the accuracy was 63.9%.

## Claims

1. An insurance premium calculation system comprising:
a reception means for receiving an input of a facial image of an animal excluding humans;
a determination means for performing predictive determination of an age of the animal from the facial image of the animal that is input to the reception means using a trained model; and
an insurance premium calculation means for calculating an insurance premium based on the age obtained by the predictive determination by the determination means,
wherein the trained model is a trained model obtained by performing learning using, as teaching data, the facial image of the animal excluding humans and the age of the animal at the time of photographing, the trained model using the facial image of the animal as an input and using the predictive determination of the age of the animal as an output.

2. The insurance premium calculation system according to claim 1, wherein the animal is a dog.

3. The insurance premium calculation system according to claim 1, wherein the animal is a cat.

4. The insurance premium calculation system according to any one of claims 1 to 3, wherein the facial image of the animal is an image captured by photographing a face of the animal from a front.

5. The insurance premium calculation system according to any one of claims 1 to 4, further comprising a storage unit for storing an insurance premium table including an age of an animal and an insurance premium,
wherein the insurance premium calculation means calculates the insurance premium using the insurance premium table.

6. An age prediction system comprising:
a reception means for receiving an input of a facial image of an animal excluding humans; and
a determination means for performing predictive determination of an age of the animal from the facial image of the animal input to the reception means using a trained model,
wherein the trained model is a trained model obtained by performing learning using, as teaching data, the facial image of the animal excluding humans and the age of the animal at the time of photographing, the trained model using the facial image of the animal as an input and using the predictive determination of the age of the animal as an output.

7. A generation method of a trained model for predicting an age of an animal excluding humans from a facial image of the animal comprising: inputting, as teaching data, the facial image of the animal excluding humans and the age of the animal at the time of photographing to a computer including artificial intelligence; and causing the artificial intelligence to learn the teaching data.

8. An insurance premium calculation method comprising:
preparing a facial image of an animal excluding humans;
inputting the facial image to a trained model, and outputting, by a computer, a prediction of an age of the animal at the time of photographing the facial image from the input facial image of the animal using the trained model; and
calculating an insurance premium for the animal based on the prediction of the age,
wherein the trained model is a trained model obtained by performing learning using, as teaching data, the facial image of the animal excluding humans and the age of the animal at the time of photographing, the trained model using the facial image of the animal as an input and using the age of the animal as an output.

9. An insurance purchase eligibility determination system comprising:
a reception means for receiving an input of a facial image of an animal excluding humans;
a determination means for performing predictive determination of an age of the animal from the facial image of the animal input to the reception means using a trained model; and
an insurance purchase eligibility determination means for determining whether the animal is eligible for insurance based on the age obtained by the predictive determination by the determination means,
wherein the trained model is a trained model obtained by performing learning using, as teaching data, the facial image of the animal excluding humans and the age of the animal at the time of photographing, the trained model using the facial image of the animal as an input and using the predictive determination of the age of the animal as an output.
